# EUROPEAN PATENT SPECIFICATION

(11) **EP 3 432 706 B1**
(45) Date of publication and mention of the grant of the patent: **23.09.2020**
(21) Application number: 17716078.5
(22) Date of filing: 27.03.2017
(51) Int. Cl.: A01K 13/00, A01L 3/00, A01L 5/00

(54) **HOOF BOOT**
HUFSCHUH
BOTTE DE SABOT

(30) Priority: 25.03.2016 US 201662313626 P
(43) Date of publication of application: 30.01.2019
(73) Proprietor: Lander, Kirt, Kingman, AZ 86402 (US)
(72) Inventor: Lander, Kirt, Kingman, AZ 86402 (US)
(74) Representative: Patentanwälte Bauer Vorberg Kayser
(86) International application number: PCT/US2017/024355
(87) International publication number: WO 2017/165892

(56) References cited:
- US-A1- 2006 207 772
- US-A1- 2012 180 441

## Description

This application claims the benefit of U.S. provisional application number 62/313,626 filed March 25, 2016.

### FIELD OF THE INVENTION

The present invention relates generally to a hoof boot used as a protective device on an animal, preferably a horse. The hoof boot of the present invention has a unique configuration that protects the entire hoof and leg of the animal by creating a shock absorbing and dissipating feature while the horse is moving and wearing the hoof boot.

### BACKGROUND OF THE INVENTION

The horse, being domesticated for six to seven thousand years, often needs supplemental hoof protection due to reduced hoof conditioning as a result of confinement. While in the past one to two thousand years, the nail on metal horse shoe has become the dominant method of said hoof protection, an alternative method of hoof protection known as the strap-on hoof boot actually predates the metal horse shoe by many thousands of years and possibly dates very near the earliest time of equine domestication, for the moment the horse is taken from the wild, its hooves begin to lose their conditioning, reducing their level of performance, prompting man to implement various forms of supplemental hoof protection.

In the past, materials technology was not what it is today, limiting the performance potential of the strap-on type hoof protection. When the Iron Age came into being, the nail-on metal horse shoe was developed as a more durable means of protection of the hoof and has been the dominant form of hoof protection for the past one to two thousand years. In more recent times, strap-on and glue-on type hoof boots comprised of modern elastomeric materials have come into existence which exhibit the necessary durability to withstand hard use upon the hooves of the horse and which also enhance the performance of the horse and further protect the hoof from shock and concussion as compared to a metal shoe. These types of hoof boots generally cover the entire solar surface of the hoof and incorporate some form of tread design for the purpose of engaging the surface ridden upon.

Horses, being hooved animals, are sensitive to impact forces from the hooves hitting the ground. This is especially problematic when horses are traveling over hard surfaces such as hard packed dirt roads, rocky trails and pavement which can cause inflammation in the hooves leading to lameness or even death. For this reason, most hoof boots on the market are constructed from impact absorbing elastomers.

The most common method of hoof boot shell construction is a one-piece molding wherein the tread, the insole, and the upper are integrally molded at one time from one type of material. This necessitates a material capable of providing good shock absorption qualities in the tread and insole while still providing good mechanical strength necessary in the upper or upper portion of the boot shell for proper stability of the shell on the hoof. In other words, one piece molded hoof boot shell construction requires that the material used in its construction serve double duty and is somewhat a compromise between the best hardness material for the insole and tread and the best hardness material for the upper. Generally, elastomeric materials in the range of 40-50 Shore D work well for this double duty task.

More preferable, though, would be a softer material employed for the construction of the tread and insole to further reduce shock and concussion with elastomers in the range of 60-80 Shore A being preferred. Experimentation, however, has shown that boot shells molded in one piece and entirely from softer materials are unsuitable for most uses due to the upper of the boot being too flexible which is unstable on the hoof leading to frequent loss of the boot. To compensate for the more flexible upper, a greater thickness in the upper could be employed but this would increase the weight and the bulk of the hoof boot which is not desirable.

A possible solution to the problem then is to construct the hoof boot shell from a composite of separate parts with a firm upper and a softer insole and tread. Designing and constructing a hoof boot shell in this manner may result in similar layered design and construction to that of traditional shoes and boots for humans where multiple parts are fastened together by various attachment means such as nails, stitches, rivets, bolts and adhesives.

Certainly, the use of nails would not work well for assembling a hoof boot subject to high stress and is possibly dangerous to the horse. Stitches might be strong enough but would be exposed to wear and tear on the bottom surface of the tread and insole leading to poor durability. Rivets and bolts are durable enough but require the use of an enlarged head on the fastener and usually a washer is employed to spread the loads. The head and washer of rivets and bolts should, for functionality reasons, be countersunk into the insole and the tread but doing this imposes a reduction in wear life for the insole and tread as said elements cannot be fully worn down due to the space taken up by the heads and washers. A thicker tread and insole would compensate for this, but this is problematic in that .5 in to .6 in (1.27cm - 1.52cm) of tread thickness is optimum and anything thicker than this can begin to present a safety issue for the horse and rider where the horse may trip or stumble during use. Thus, making the tread thicker so as to employ rivets or bolts as a fastening means is undesirable.

This leaves the manufacturer with adhesives as a method of attaching all the pieces together in a composite boot. Modern adhesives for bonding the most common polyurethane materials used in hoof boot shell construction can work, but require considerable preparation of the mating surfaces with some adhesives requiring a primer and/or post heat curing. By employing this method, the quality of the bond is subject to human error both in the surface preparation of the mating parts, the pre-processing of the adhesives, and the post processing or time for curing of the adhesives. This sequence of bonding exposes itself to the quality of workmanship by the humans performing the bonding operations.

Therefore, the currently disclosed composite hoof boot shell configuration was created to do away with traditional adhesives, and the firmer upper and the softer tread and insole are assembled and mechanically attached during the molding process of the tread and insole. This device and method improves the prior art in durability of the hoof boot, the method of manufacture, and the performance on the animal.

Considering the various hoof boots on the market and those as found in various patents and patent publications, none of these devices provide all of the elements which result in the durability, functionality, and performance found in the present invention. Some of the patent and patent publications relevant to this invention include U.S. Pat. No. 9363,980 issued to Lander, U.S. Pub. No. 2011-0000173 invented by Lander, U.S. Pub. No. 2013-0008139 invented by Lander, U.S. Pub. No. 2012-0180441 invented by Lander, U.S. Pat. No. 4,616,709 issued to Lee, U.S. Pat. No. 3,302,723 issued to Renkenberger et al, U.S. Pat. No. 2,024,265 issued to Anderson et al, U.S. Pat. No. 7,203,985 issued to Cox et al, U.S. Pat. No. 6,915,859 issued to Craig et al, U.S. Pat. No. 522,789 issued to Gibbs, U.S. Pat. No. 558,455 issued to Lewty, U.S. Pat. No. 2,043,359 issued to Swanstrom, U.S. Pat. No. 4,503,914 issued to Voland, U.S. Pat. No. 3,630,289 issued to Norberg, U.S. Pat. No. 4,899,824 issued to Techer et al., U.S. Pat. No. 5,002,132 issued to Fox et al, and GB Pat. No. GB1544062 issued to Schumacher. US2006/0207772 A1 discloses a hoof boot.

The present invention is defined in claim 1. Claims 2-9 relate to particular embodiments of the hoof boot of claim 1. The present invention includes a new and improved apparatus for horse hoof protection. The improvement includes a one-piece hoof boot that allows for increased impact shock absorption during use. The use of two polymers of different hardness that are mechanically bound together to create the hoof boot allow improved impact shock absorption and protection of the horse hoof.

### SUMMARY OF THE INVENTION

The present invention is directed to a hoof boot constructed of at least two polymers of different hardness wherein the hoof boot improves impact shock absorption while the animal is walking or running. Additionally, the present invention also improves hoof boot retention and stability while on the hoof of the animal. Because the hoof boot is constructed of at least two polymers of different hardness, the skeleton portion of the hoof boot can be made of a different material that can be for instance, harder, more rigid, thinner, lighter, etc., while still keeping the tread and insole of a softer polymer for the protection of the animal. This allows the entire hoof boot to be made lighter which enhances retention and stability of the boot.

The hoof boot of the present invention comprises a hoof boot shell wherein the hoof boot shell further comprises a skeleton including a core and an upper, wherein the core includes a tread side and an insole side and a casing including a tread and an insole. The skeleton is constructed of a first polymer with a first hardness and the casing is constructed of a second polymer with a second hardness that is less than the first polymer and absorbs and dissipates energy from impact related shock of the hoof boot striking the ground. When the hoof boot is placed on the animal, the upper is in contact with the upper part of the hoof and the casing is in contact with the bottom of the hoof and the ground and encapsulates the core. It is preferred that the core does not touch any surface of the hoof or the ground, however, other configurations can be considered in certain circumstances.

It is an object of the present invention to provide a hoof boot that protects an animal's hoof while at the same time providing impact shock absorption while the animal is walking or running.

It is a further object of the present invention to provide a hoof boot that straps on to or can be glued on to an animal's hoof.

It is a further object of the present invention to provide a hoof boot that is made of at least two elastomeric polymer materials wherein the first elastomeric polymer has a first hardness and the second elastomeric polymer has a second hardness softer than that of the first polymer material.

It is a further object of the present invention to provide a hoof boot that is cost effective to manufacture.

It is a further object of the present invention to provide a hoof boot where the first and second polymers are mechanically attached through openings in the core.

### BRIEF DESCRIPTION OF THE DRAWINGS

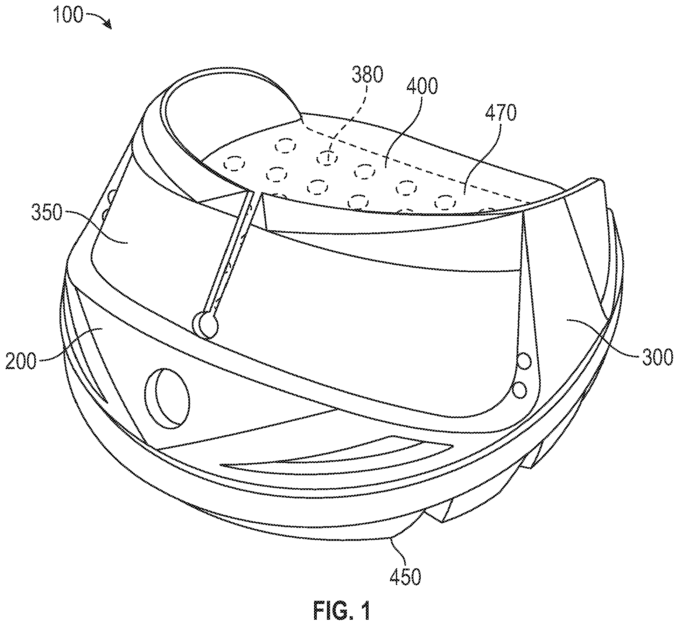

**Fig. 1** shows a perspective view of the hoof boot of the present invention.

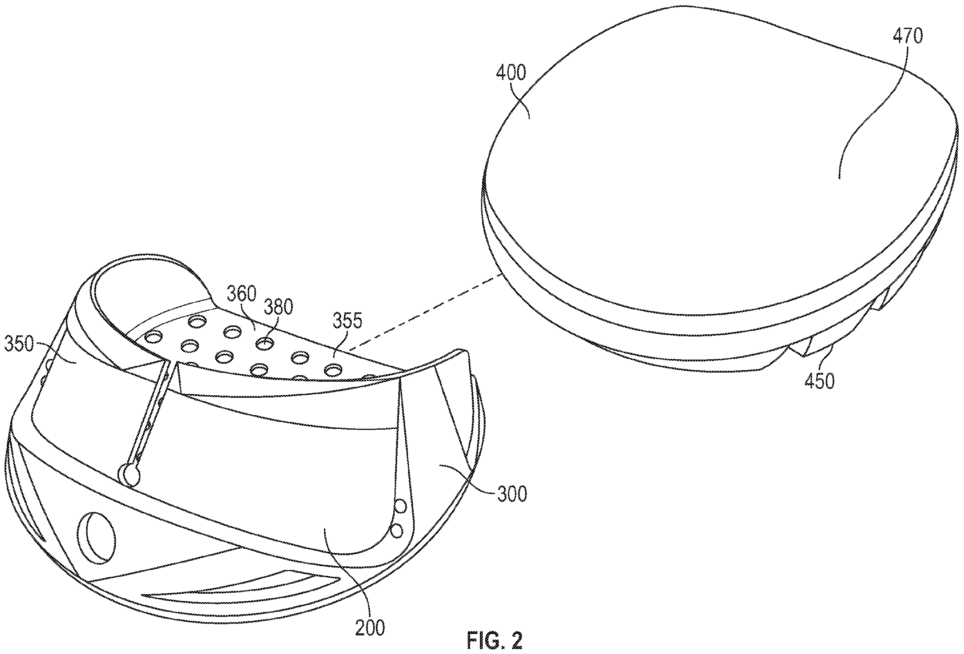

**Fig. 2** shows a perspective view of the following hoof boot components: skeleton and the tread and insole of the casing.

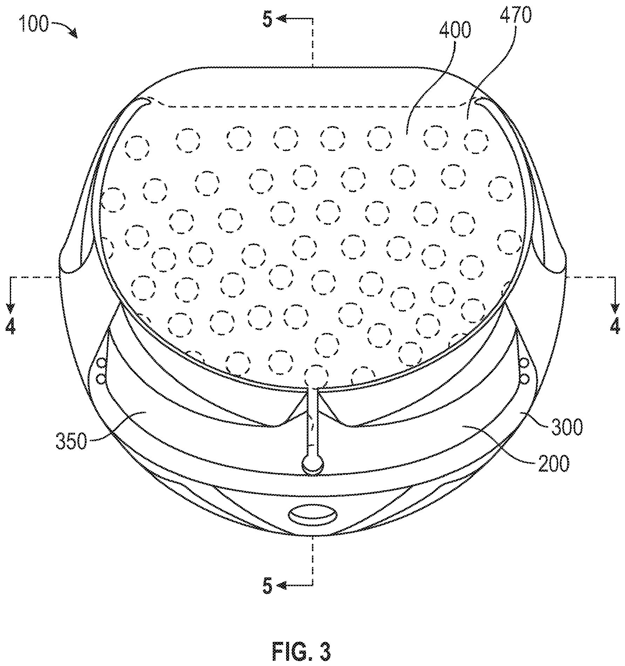

**Fig. 3** shows a top view of the hoof boot with the core and the casing. The insole portion of the hoof boot is shown.
**Fig. 4** shows a cross section front view of the hoof boot.
**Fig. 5** shows a cross section side view of the hoof boot.

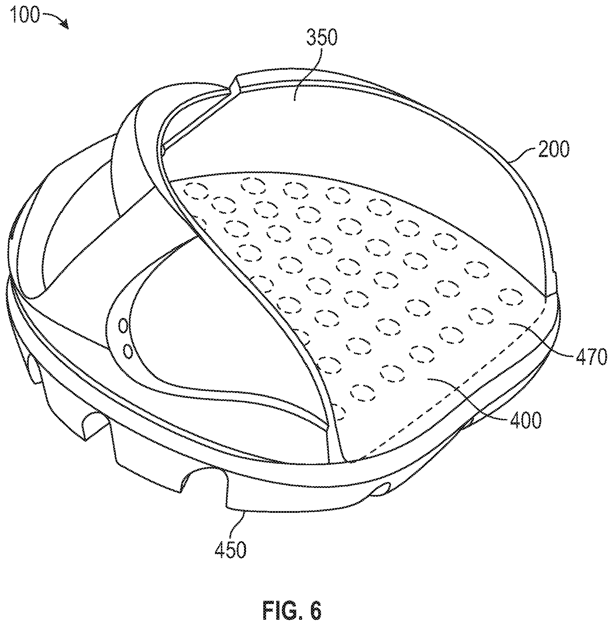

**Fig. 6** shows a back perspective view of the hoof boot of the present invention.

### DESCRIPTION OF PREFERRED EMBODIMENTS

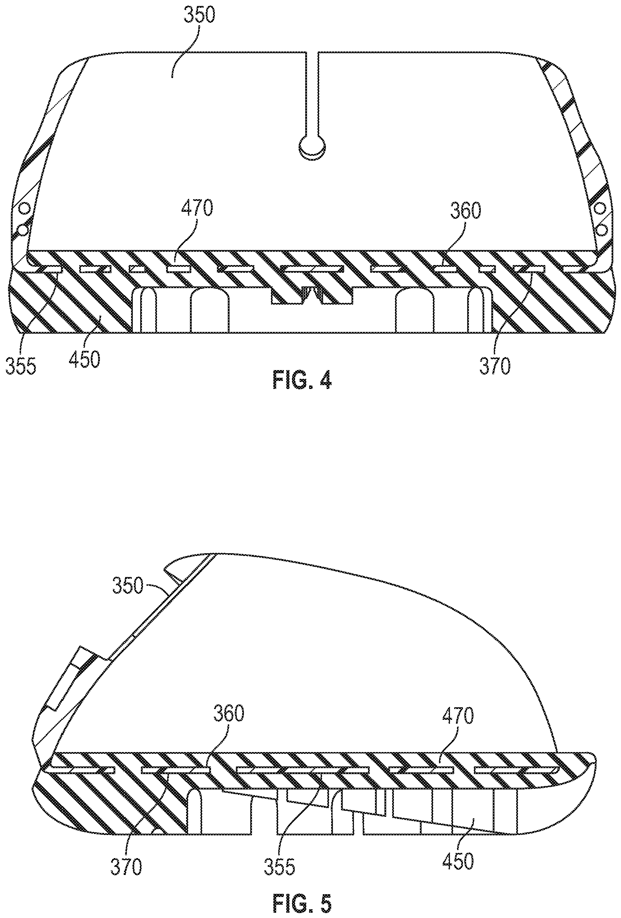

The present invention relates to a hoof boot **100** for protecting the hooves of animals such as horses and improving shock impact and absorption caused by the hoof of the animal coming into contact with the ground while walking or running. More specifically, the hoof boot **100** includes a hoof boot shell **200** alone or in combination with other components. The hoof boot shell **200** includes a skeleton **300** and a casing **400.** As shown in the cross section **Figs. 4** and **5****,** the skeleton **300** further includes an upper **350** and a core **355** that is a horizontal section with an insole side **360** and a tread side **370.** The casing **400** further includes a tread **450** and an insole **470** that encapsulates the core **355** portion of the skeleton **300** forming a one-piece hoof boot **100** in a one-piece mechanically attached device. In particular, the casing **400** is the combination of the tread **450** and insole **470** that encapsulates the core **355** of the skeleton **300.** The hoof boot **100** in this invention can be a strap on type of hoof boot, a glue on type of hoof boot, or a hoof boot with a heel captivator.

According to the invention, the skeleton **300** is constructed of a first polymer with a first hardness and the casing **400** is constructed of a second polymer with a second hardness that is less than the hardness of the first polymer. The casing **400** made of the second polymer absorbs and dissipates energy from impact related shock of the hoof boot **100** striking the ground while the hoof boot **100** is on the hoof of the horse. Preferably, the second polymer substantially dissipates the energy absorbed from the impact. More preferably, the second polymer dissipates all of the energy absorbed from the impact. Most preferably, the second polymer absorbs and dissipates the energy of the impact related shock without the first polymer dissipating the energy of the impact related shock. The skeleton **300** serves to provide structural support and attachment and retention of the hoof boot **100** to the hoof. The hoof boot **100** could be constructed either as a strap on boot or a glue on boot where the upper **350** portion of the skeleton **300** is bonded to the hoof.

The purpose of the skeleton **300** of the present invention is to provide a means of fastening a separately created upper **350** and core **355** to the tread **450** and insole **470** without using unreliable, feature compromising, and potentially dangerous conventional adhesives and fastening means. The skeleton **300** serves to provide a means of manufacturing a composite hoof boot shell **200** with greater structural reliability than is possible with conventionally assembled composite hoof boot shells. This results in a more reliable and lower cost composite hoof boot shell **200** with advantages over conventional integrally molded mono material hoof boot shells being less bulk and mass, enhanced retention and stability upon the hoof, a greater ability to absorb shock and concussion to the hoof during use providing greater comfort to the horse, a higher level of performance traversing firm, hard, and rugged terrain, and potentially lower incidence of injury to the hoof, lower leg, and shoulder of the horse.

In one preferred embodiment, when the hoof boot **100** is placed on the horse, the shell **200** fits around the hoof, and the upper **350** is in contact with the walls of the hoof, while the casing **400** is in contact with the bottom of the hoof on the insole **470** and the ground on the tread **450** and encapsulates the core **355.** In this embodiment, it is believed that the core **355** does not absorb or dissipate energy. Rather, the core **355** is used to strengthen the device and hold the shape of the hoof boot **100** while on the hoof. If the entire hoof boot shell **200** were made of the softer polymer, it would not be structurally strong enough to hold its shape and stay on the animal. In another embodiment, the casing **400** can extend to encapsulate a portion of the upper **350** and core **355.** In an additional alternate embodiment, the casing **400** can extend to encapsulate the entire upper **350** and core **355.**

This preferred configuration begins with the hoof boot shell **200** being constructed of a pre-molded, one-piece skeleton **300** that is formed from a durable, first polymer with a preferable hardness of 50-70 Shore D. In the most preferred embodiment, the hardness of the first polymer for the skeleton **300** is 60 Shore D. The skeleton **300** includes an upper **350** and a core **355.** The upper **350** is the part of the skeleton **300** that covers the walls of the hoof, and the core **355** is the horizontal section where the insole **470** and tread **450** made of the second polymer are coupled to the hoof boot shell **200.** In the preferred embodiment, the insole **470** and tread **450** are made of a softer polymer material in the range of 40-90 Shore A hardness. In the most preferred embodiment, the insole **470** and tread **450** are made of a polymer of 50 Shore A hardness.

The core **355** that includes a tread side **360** and insole side **370** may have a horizontal surface thickness of preferably 1/32 in. to 1/4 in. (0.08 cm - 0.64 cm) located at the horizontal transition plane where the tread **450** and the insole **470** meet in the completed hoof boot **100.** The tread side **360** and the insole side **370** of the core **355** are made to a slight thickness so that the second polymer can be coupled to the tread side **360** and insole side **370** forming the tread **450** and the insole **470** without adding too much weight or bulk to the hoof boot **100.** In the preferred embodiment, the thickness of the insole **470** consists of no more than 3/8 inch (0.95 cm) compressible material and is preferably 1/8 inch (0.32 cm). The remaining thickness of the compressible material is found on the tread **450** of the hoof boot **100.** In the preferred embodiment, the tread thickness is preferably greater than ¼ inch (0.64 cm), and more preferably ¼ inch to ½ inch (0.64cm - 1.27cm).

In the preferred embodiment, the core **355** features a plurality of holes **380.** These holes **380** can be of any shape or configuration. It is preferred that the percentage of the range of open space made up by the holes **380** in the core **355** is in the range of approximately 50%--70%. These holes **380** create the space where the first and second polymers are mechanically attached creating the hoof boot **100** with the harder skeleton **300** and the softer casing **400.** In an alternate preferred embodiment, the core **355** can have an opening such as a slot that goes down the length of the core **355** beginning at the rear of the hoof boot shell **200.** This embodiment improves lateral flexibility and expansion at the back of the boot **100.**

In order to create the one-piece shell **200,** the pre-molded skeleton **300** is placed within an empty cavity of the mold used to create the tread **450** and insole **470** and the liquid form of the second polymer is added to the mold. This liquid form of the second polymer flows through the holes or slots **380** featured in the core **355** of the pre-molded skeleton **300,** simultaneously forming the tread **450** and the insole **470.** When the liquid form of the second polymer hardens/solidifies/polymerizes to its finished state, the one-piece hoof boot **100** is created with an integrally made skeleton **300** for structure and a casing **400** with an insole **470** and tread **450** that absorb and dissipate the shock impact of the hoof and hoof boot **100** combination bearing upon on the ground. This method of mechanical attachment of the skeleton **300** to the completed insole **470** and tread **450** combination results in a completed hoof boot **100** without the use of a separate, conventional adhesive or conventional, mechanical fastening process. This prevents errors when using adhesives and potential hazards created when using other attachment mechanisms. Polyurethane is an example of the type of polymer used in this invention.

## Claims

1. A hoof boot (100) comprising:
a hoof boot (100) shell (200) wherein the hoof boot (100) shell (200) further comprises a skeleton (300) serving to provide structural support and attachment and retention of the hoof boot (100) to the hoof, the skeleton (300) including an upper (350) and a core (355), the core (355) having a tread side (370) and an insole side (360);
and a casing (400), the casing (400) including a tread (450) and an insole (470);
wherein the skeleton (300) is constructed of a first polymer with a first hardness and the casing (400) is constructed of a second polymer with a second hardness wherein the second hardness is less than the first hardness and wherein the casing (400) absorbs and dissipates energy from impact related shock of the hoof boot (100) striking the ground;
wherein when the hoof boot (100) is placed on the animal, the casing (400) is in contact with the bottom of the hoof and the ground and
substantially encapsulates the core (355).

2. The hoof boot (100) of claim 1 wherein the core (355) has a thickness between : 0.08 cm (1/32 inch) and 0.64 cm (1/4 inch).

3. The hoof boot (100) as in claims 1 and 2 wherein the core (355) comprises holes (380) wherein the holes (380) allow a mechanical coupling of the first and second polymers.

4. The hoof boot (100) of claim 3 wherein the holes (380) create a range of open space on the core (355) of between 50%-70%.

5. The hoof boot (100) as in any of the claims 1-4 wherein the first polymer of the skeleton (300) has a hardness of 50-70 Shore D, and wherein the second polymer of the casing (400) has a hardness of 40-90 Shore A.

6. The hoof boot (100) as in any one of the above claims wherein the thickness of the insole (470) is no more than 0.95 cm (3/8 inch) compressible polymer material.

7. The hoof boot (100) of any one of the above claims wherein the tread (450) has a thickness greater than 0.64 cm (1/4 inch).

8. The hoof boot (100) of any one of the above claims wherein the core (355) includes a slot to allow lateral flexibility of the hoof boot (100).

9. The hoof boot (100) of any one of the above claims wherein the hoof boot (100) is selected from the group consisting of:
a. a strap on boot; and
b. a glue on boot.

## Patentansprüche

1. Hufschuh (100), umfassend:
eine Hülle (200) des Hufschuhs (100), wobei die Hülle (200) des Hufschuhs (100) des Weiteren einen Rahmen (300) umfasst, der dazu dient, für strukturelle Unterstützung und Befestigung und Halt des Hufschuhs (100) am Huf zu sorgen, wobei der Rahmen (300) ein Obermaterial (350) und einen Kern (355) umfasst, wobei der Kern (355) eine Laufflächenseite (370) und eine Innensohlenseite (360) aufweist;
und eine Verkleidung (400), wobei die Verkleidung (400) eine Lauffläche (450) und eine Innensohle (470) umfasst;
wobei der Rahmen (300) aus einem ersten Polymer mit einer ersten Härte aufgebaut ist, und die Verkleidung (400) aus einem zweiten Polymer mit einer zweiten Härte aufgebaut ist, wobei die zweite Härte geringer als die erste Härte ist, und wobei die Verkleidung (400) Energie aus einem aufprallbedingten Stoß des Auftreffens des Hufschuhs (100) auf dem Untergrund absorbiert und abbaut;
wobei, wenn der Hufschuh (100) am Tier platziert wird, die Verkleidung (400) mit der Unterseite des Hufs und dem Untergrund in Kontakt ist und im Wesentlichen den Kern (355) umhüllt.

2. Hufschuh (100) nach Anspruch 1, wobei der Kern (355) eine Dicke zwischen 0,08 cm (1/32 Zoll) und 0,64 cm (1/4 Zoll) aufweist.

3. Hufschuh (100) nach den Ansprüchen 1 und 2, wobei der Kern (355) Löcher (380) umfasst, wobei die Löcher (380) eine mechanische Kopplung des ersten und des zweiten Polymers erlauben.

4. Hufschuh (100) nach Anspruch 3, wobei die Löcher (380) einen Bereich offenen Raums auf dem Kern (355) von zwischen 50%-70% schaffen.

5. Hufschuh (100) nach einem der Ansprüche 1-4, wobei das erste Polymer des Rahmens (300) eine Härte von 50-70 Shore D aufweist, und wobei das zweite Polymer der Verkleidung (400) eine Härte von 40-90 Shore A aufweist.

6. Hufschuh (100) nach einem der vorangehenden Ansprüche, wobei die Dicke der Innensohle (470) nicht mehr als 0,95 cm (3/8 Zoll) komprimierbares Polymermaterial ist.

7. Hufschuh (100) nach einem der vorangehenden Ansprüche, wobei die Lauffläche (450) eine Dicke von mehr als 0,64 cm (1/4 Zoll) aufweist.

8. Hufschuh (100) nach einem der vorangehenden Ansprüche, wobei der Kern (355) einen Schlitz umfasst, um eine seitliche Flexibilität des Hufschuhs (100) zu ermöglichen.

9. Hufschuh (100) nach einem der vorangehenden Ansprüche, wobei der Hufschuh (100) aus der Gruppe ausgewählt ist, die besteht aus:
a. ein anzuschnallender Schuh; und
b. ein anzuklebender Schuh.

## Revendications

1. Botte de sabot (100) comprenant:
une coque (200) de botte de sabot (100), dans laquelle la coque (200) de botte de sabot (100) comprend en outre un cadre (300) qui sert à fournir un support structurel et une fixation et un maintien de la botte de sabot (100) sur le sabot, ledit cadre (300) comprenant une tige (350) et un noyau (355), le noyau (355) ayant un côté surface de marche (370) et un côté semelle intérieure (360);
et une enveloppe (400), ladite enveloppe (400) comprenant une surface de marche (450) et une semelle intérieure (470);
dans laquelle ledit cadre (300) est construit en un premier polymère ayant une première dureté et ladite enveloppe (400) est construite en un deuxième polymère ayant une deuxième dureté, la deuxième dureté étant inférieure à la première dureté et l'enveloppe (400) absorbant et dissipant de l'énergie résultant d'un choc dû à l'impact de la botte de sabot (100) qui frappe le sol;
dans laquelle, lorsque la botte de sabot (100) est placée sur l'animal, l'enveloppe (400) est en contact avec le fond du sabot et le sol et encapsule pour l'essentiel le noyau (355).

2. Botte de sabot (100) selon la revendication 1, dans laquelle le noyau (355) présente une épaisseur comprise entre 0,08 cm (1/32 pouce) et 0,64 cm (1/4 pouce).

3. Botte de sabot (100) selon les revendications 1 et 2, dans laquelle le noyau (355) comprend des trous (380), dans laquelle les trous (380) permettent un couplage mécanique des premier et deuxième polymères.

4. Botte de sabot (100) selon la revendication 3, dans laquelle les trous (380) créent une plage d'espace ouvert sur le noyau (355) comprise entre 50 % et 70 %.

5. Botte de sabot (100) selon l'une quelconque des revendications 1 à 4, dans laquelle le premier polymère du cadre (300) présente une dureté comprise entre 50 et 70 Shore D, et dans laquelle le deuxième polymère de l'enveloppe (400) présente une dureté comprise entre 40 et 90 Shore A.

6. Botte de sabot (100) selon l'une quelconque des revendications précédentes, dans laquelle l'épaisseur de la semelle intérieure (470) n'est pas supérieure à 0,95 cm (3/8 pouce) de matériau polymère compressible.

7. Botte de sabot (100) selon l'une quelconque des revendications précédentes, dans laquelle la surface de marche (450) présente une épaisseur supérieure à 0,64 cm (1/4 pouce).

8. Botte de sabot (100) selon l'une quelconque des revendications précédentes, dans laquelle le noyau (355) comprend une fente pour permettre une flexibilité latérale de la botte de sabot (100).

9. Botte de sabot (100) selon l'une quelconque des revendications précédentes, dans laquelle la botte de sabot (100) est choisie dans le groupe constitué par:
a. une botte à chausser; et
b. une botte à coller.
